# EUROPEAN PATENT APPLICATION

(11) **EP 4 578 733 A1**
(43) Date of publication of application: **02.07.2025**
(21) Application number: 23383388.8
(22) Date of filing: 27.12.2023
(51) Int. Cl.: B60Q 1/26, B60R 1/12

(54) **BLIND SPOT INDICATOR ASSEMBLY FOR A MOTOR VEHICLE AND METHOD FOR ASSEMBLING A BLIND SPOT INDICATOR ASSEMBLY**

(71) Applicant: Ficosa Automotive, S.L.U., 08028 Barcelona (ES)
(72) Inventor: RUIZ ORTEGA, Nestor, 08232 Viladecavalls (ES)
(74) Representative: ZBM Patents - Zea, Barlocci & Markvardsen

(57) **Abstract**

A blind spot indicator assembly 100 for a motor vehicle comprises a housing 110 including a first side and an inner surface. It also has a printed circuit board and a lens assembly 160 arranged to close an aperture 120 in the first side. A double-side adhesive tape 170 is provided to the lens assembly 160 for attaching it to the housing 110 and to the printed circuit board 140. A method is also provided for assembling said blind spot indicator assembly.

## Description

### TECHNICAL FIELD

The present disclosure relates to indicator assemblies intended to warn a motor vehicle driver that an object, such as another vehicle, is within a blind spot or blind area.

### BACKGROUND

A blind spot or area is a lateral zone near the motor vehicle where the driver has no suitable vision when looking in exterior rear-view mirrors.

Blind spot indicators are known based on sensors and optical elements that identify when objects enter a blind spot or zone that are capable of alerting the driver that the blind spot is now being occupied by an object, such as for example a vehicle in the adjacent lane.

One example of a rear-view mirror assembly having a blind spot indicator for motor vehicles is disclosed in US9663027 filed in the name of the same applicant of the present application. The rear-view mirror assembly comprises a reflective element attached to a clamping plate, and a watertight illumination module attached to the reflective element. A printed circuit board is arranged in an inner cavity of the watertight illumination module at an angle to the clamping plate. At least one light emitting diode is provided on the printed circuit board. A protective case for the watertight illumination module has a metalized and textured surface in its interior. A first side of the printed circuit board rests on the watertight illumination module and a second side opposite the first side does not rest on the watertight illumination module. The light emitted by the light emitting diodes bounces on the metalized surface of the protective case emitting light indirectly passing through the surface of the reflecting element through its opening.

US9754489 and US10614719 refer to mirror reflective element sub-assemblies for motor vehicle exterior rear-view mirrors comprising mirror reflective element, a mirror back plate, and a blind zone indication module. In US9754489, the module includes a housing, a circuit board and a light source and is disposed at an aperture formed through the back plate. The circuit board includes circuitry and electrically conductive terminals in electrical connection with circuitry of the circuit board. The electrically conductive terminals extend into a connector portion of the housing. The connector portion is configured to connect to a connector of a wire harness of the exterior rear-view mirror assembly. In US10614719, the module is attached at the rear side of the mirror reflective element via an aperture of the mirror back plate and it also includes a housing for receiving the circuit element and the at least one light emitting diode therein. The housing is received in a rear side of the mirror back plate. Electrically conductive terminals are provided in the circuit element connected therewith and received at a connector portion of the housing to connect to a wire harness of the rear-view mirror assembly.

Although such blind spot indicators enhance driving safety, it has been found that a problem exists that illumination is partially directed on directions different from the driver and the indicator assembly is costly. There still remains a need for blind spot indicators in which the illumination on users different from the driver can be efficiently avoided with reduced costs in particular assembly costs.

### SUMMARY

The present disclosure provides a blind spot indicator assembly for a motor vehicle for warning of the presence of another vehicle or object in the vicinity.

The present blind spot indicator assembly has been found to address the above issues in prior art devices while, at the same time, provides further significant advantages.

The present blind spot indicator assembly may be, for example, a visual indicator to show the driver that another vehicle or object has been detected.

The present blind spot indicator assembly comprises a housing that includes a first side having an aperture, and an inner surface.

The blind spot indicator assembly further includes a printed circuit board (PCB). The PCB has a first side and a second side, opposite to the first side. It may be preferred that the first side of the PCB comprises at least one light source. It may be also preferred that the PCB is L-shaped such that a gap is defined between the PCB and the housing for allowing the light to pass through. The PCB is preferably arranged parallel to the aperture. The PCB serves the purpose of supporting said at least one light source, as well as required circuitry therefor.

The lens assembly is arranged to close the above-mentioned aperture. The lens assembly includes a double-side adhesive tape for attaching the lens assembly to the housing and to the above-mentioned second side of the PCB. The PCB may be directly attached to the above-mentioned double-side adhesive tape.

Said double-side adhesive tape may be preferably made of an opaque material. Said double-side adhesive tape preferably does not cover the entire lens assembly allowing light to leave from the light source.

More specifically, the double-side adhesive tape, when viewed from the lens assembly, covers a least 50% of the second side of the PCB. More preferably, the double-side adhesive tape, when viewed from the lens assembly, covers a least 90% of the second side of the PCB. Optimally, the double-side adhesive tape, when viewed from the lens assembly, covers 100% of the second side of the PCB.

The lens assembly is arranged to receive indirect light projected from the at least one light source.

A light control assembly may be arranged in the inner surface of the housing or between the PCB and said inner surface of the housing to receive the light projected from the at least one light source.

The lens assembly is preferably arranged to receive light from the above-mentioned light control assembly.

As light control assembly is to be understood herein as any element that could redirect the light projected from the at least one light source, for example, any additional optical element other than the housing, as well as an internal surface of the housing used for redirecting light from the at least one light source to the aperture.

In one advantageous example, at least a great majority of a circuitry is provided on said first side than on said second side of the printed circuit board.

In one example, the housing has a holding area for placing the first side of the PCB so that the second side is at least substantially flush with the aperture. Said holding area of the housing may comprise opposite walls for placing the first side of the PCB so that the second side of the PCB is at least substantially flush with the aperture. Said walls may be arranged parallel to the aperture.

At least one of the light control assembly and the lens assembly may comprise a diffusive portion.

A method for assembling a blind spot indicator assembly is disclosed herein. Said method may be applied to the above-mentioned blind spot indicator assembly or to any blind spot indicator assembly comprising a housing including an aperture and an inner surface, a PCB having a first side, and a second side opposite to the first side, and a lens assembly arranged to close said aperture.

The assembling method comprises arranging the housing of the blind spot indicator assembly with the aperture of the housing perpendicular to the direction of gravity and further away to the ground than a second side of the housing opposite the first side of the housing, and with the second side of the PCB further away to the ground than the first side of the PCB. The method further comprises arranging the PCB in the holding area of the housing and arranging the lens assembly, including a double-side adhesive tape, such that said double-side adhesive tape is arranged between the lens assembly and both the housing and the PCB.

The method may further comprise providing the double-side adhesive tape on the second side of the PCB and on the external surface of the aperture of the housing. A compression pressure may be applied to the housing and the lens assembly in an assembly direction, at least substantially perpendicular to lens assembly.

With the above-described features, a PCB may be advantageously fitted to a blind spot indicator assembly in a rear-view mirror assembly for motor vehicles without specific fixations, thus advantageously reducing complexity and costs.

A simple and cost-effective blind spot indicator assembly is achieved with a simpler assembly process in particular in attaching the PCB, the housing and lens using the minimum possible number of parts.

### BRIEF DESCRIPTION OF THE DRAWINGS

A non-limiting example of the present disclosure will be described in the following, with reference to the appended drawings.

In the drawings:
Figure 1 is a sectional view of one example of the present blind spot indicator assembly;
Figure 2 is an exploded view of the blind spot indicator assembly shown in figure 1;
Figure 3 is a general perspective view of a rear-view mirror having the blind spot indicator assembly illustrated in figures 1 and 2; and
Figure 4 is an exploded view of the rear-view mirror shown in figure 3.

### DETAILED DESCRIPTION OF ONE EXAMPLE

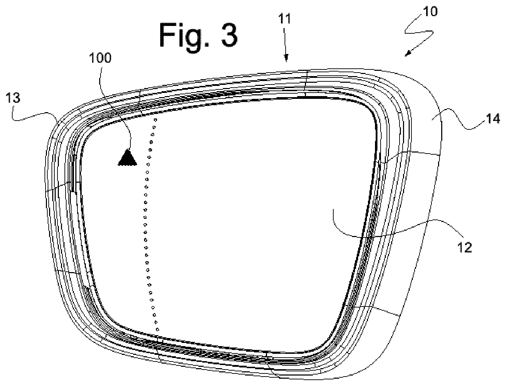

Referring to figure 3 of the drawings, a non-limiting example of a rear-view mirror 10 is shown. The rear-view mirror 10 comprises a mirror head 11, a mirror glass 12, a support arm for being attached to an exterior side of a vehicle, not shown. The rear-view mirror 10 further comprises the present blind spot indicator assembly 100 arranged at a corner portion of the mirror head 11, near an exterior side 13 located farthest to the vehicle body, opposite an interior side 14 of the rear-view mirror 10 located closest to the vehicle body. The triangle depicted in figure 3 corresponds to a small window through which the light from the blind spot indicator assembly 100 passes in use.

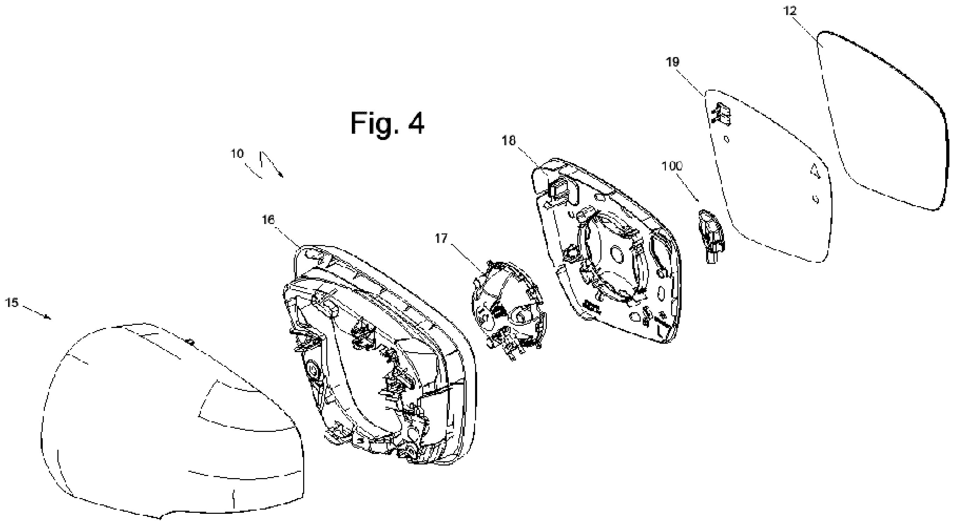

Now referring to figure 4 of the drawings, the mirror head 11 of the rear-view mirror 10 includes a mirror housing 15 for receiving therein a mirror frame 16 with the mirror glass 12. A mirror glass regulator 17 is fitted to the mirror frame 16 for adjusting the orientation of the mirror glass 12 as required.

The rear-view mirror 10 is further provided with a back plate 18 to which the blind spot indicator assembly 100 is fitted. A heater 19 is also provided including a heating element which in use acts as resistive heating of the mirror glass 12 as an electric current flows through. The heater 19 includes an adhesive for attaching the mirror glass 12 to the back plate 18. The blind spot indicator assembly 100 is in turn attached to the heater 19. The back plate 18 has a hole formed therein to allow a rear portion of the blind spot indicator assembly 100 to protrude there through.

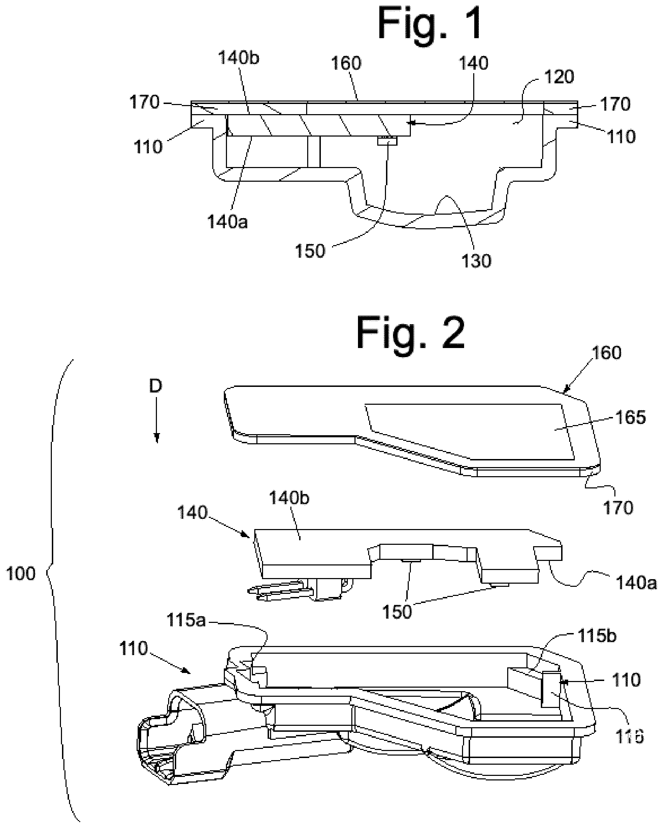

Referring to figures 1 and 2 of the drawings, the blind spot indicator assembly 100 comprises a housing 110. The housing 110 of the blind spot indicator assembly 100 includes a first side with an aperture 120, and an inner surface.

The blind spot indicator assembly 100 further includes a printed circuit board (PCB) 140. In the example shown, the PCB 140 is L-shaped such that a gap is defined between the PCB 140 and the housing 110 for allowing the light to pass through.

The PCB 140 has first and second opposite sides 140a, 140b. A great majority of a circuitry is provided on the first side 140a than on the second side 140b.

A lens assembly 160 is arranged to close the aperture 120 of the housing 110. As shown in figure 2, the PCB 140 is arranged parallel to the aperture 120.

The lens assembly 160 includes a double-side adhesive tape 170. The double-side adhesive tape 170 is made of an opaque material. In use, the PCB 140 is directly attached to said double-side adhesive tape 170. More specifically, the double-side adhesive tape 170 is intended to be directly attached to the second side 140b of the PCB 140 and attaching the lens assembly 160 to the housing 110.

When viewed from the lens assembly 160, the double-side adhesive tape 170 covers 50% of the second side 140b of the PCB 140 or more. In this example, although it is preferred that the double-side adhesive tape 170 covers 90% of the second side 140b of the PCB 140, the double-side adhesive tape 170 completely covers the whole area of said second side 140b of the PCB 140. In turn, the double-side adhesive tape 170 is arranged not covering the entire lens assembly 160 so as to allow the light to pass through.

A light source 150 is fitted to the first side 140a of the PCB 140. A light control assembly 130 is arranged in the inner surface of the housing 110, being part of the same inner surface or being an external element attached to the inner surface of the housing. The inner surface of the housing 110 is arranged opposite the aperture 120 of the housing 110. At least one of the lens assembly 160 and said light control assembly 130 may comprise a diffusive portion 165.

In a further example, not shown, the light control assembly 130 could be arranged between the PCB 140 and the inner surface of the housing 110.

In any case, the light control assembly 130 is positioned to receive the light projected from the light source 150. In turn, the lens assembly 160 or at least a portion of the lens assembly 160 having no opaque adhesive is arranged to receive light from the light control assembly 130.

In the example shown in figure 2, the light control assembly 130 includes an optical element being part of the same interior surface of the housing 110. Said optical element is arranged to direct light from the light source 150 to the above-mentioned aperture 120.

The housing 110 of the present blind spot indicator assembly 100 has a holding area 115 for placing the first side 140a of the PCB 140 so that the second side 140b is at least substantially flush with the aperture 120. Said holding area 115 comprises opposite walls 115a, 115b for placing the first side 140a of the PCB 140 so that the second side 140b of the PCB 140 is at least substantially flush with the aperture 120.

Projections 116 as shown in figure 2 may be provided in the holding area 115 to fit the PCB 140. In use, the PCB 140 is fitted between said projections 116, the opposite walls 115a, 115b and the internal surface of the housing 110. As a result, movements of the PCB 140 with respect to the housing 110 are avoided while movements in an assembly direction D are allowed.

For assembling the blind spot indicator assembly 100 described above, the housing 110 of the blind spot indicator assembly 100 is arranged so that the aperture 120 of the housing 110 is perpendicular to the direction of gravity and further away to the ground than a second side of the housing 110 opposite the first side of the housing 110, and with the second side 140b of the PCB 140 further away to the ground than the first side 140a of the PCB 140.

A double-side adhesive tape 170 is provided on the second side 140b of the PCB 140 and on the external surface of the aperture 120 of the housing 110. The PCB 140 is arranged in the holding area 115 of the housing 110 and the lens assembly 160 is mounted such that said double-side adhesive tape 170 is arranged between the lens assembly 160 and both the housing 110 and the PCB 140.

A compression pressure is finally applied to the housing 110 and to the lens assembly 160 in an assembly direction D, as shown in figure 2, perpendicular or substantially perpendicular to the lens assembly 160.

One example of the present blind spot indicator assembly 100 and method of assembly have been disclosed herein. However, other alternatives, modifications, uses and/or equivalents thereof are possible. Furthermore, all possible combinations of the described example are also covered by the present disclosure. The scope of the present disclosure should not be limited by the particular example disclosed herein but should be determined only by a fair reading of the claims that follow.

Reference signs related to drawings placed in parentheses in the claims are solely for attempting to increase the intelligibility of the claims and shall not be construed as limiting their scope.

## Claims

1. A blind spot indicator assembly (100) for a motor vehicle, the assembly (100) comprising:
- a housing (110) including a first side having an aperture (120), and an inner surface;
- a printed circuit board (140) having a first side (140a) and a second side (140b) opposite to the first side (140a); and
- a lens assembly (160) arranged to close the aperture (120),
wherein the lens assembly (160) includes a double-side adhesive tape (170) for attaching the lens assembly (160) to the housing (110) and to the second side (140b) of the printed circuit board (140).

2. The blind spot indicator assembly (100) of claim 1, wherein the first side (140a) of the printed circuit board (140) comprises at least one light source (150), and a light control assembly (130) is arranged in the inner surface of the housing (110) or between the printed circuit board (140) and said inner surface to receive the light projected from the at least one light source (150), the lens assembly (160) being arranged to receive light from the light control assembly (130).

3. The blind spot indicator assembly (100) of claim 1 or 2, wherein the light control assembly (130) comprises at least one optical element arranged to direct light from the at least one light source (150) to the aperture (120).

4. The blind spot indicator assembly (100) of any preceding claim, wherein the double-side adhesive tape (170) is made of an opaque material.

5. The blind spot indicator assembly (100) of any preceding claim, wherein at least a great majority of a circuitry is provided on said first side (140a) than on said second side (140b) of the printed circuit board (140).

6. The blind spot indicator assembly (100) of any preceding claim, wherein the printed circuit board (140) is arranged parallel to the aperture (120).

7. The blind spot indicator assembly (100) of any preceding claim, wherein the printed circuit board (140) is directly attached to the double-side adhesive tape (170).

8. The blind spot indicator assembly (100) of any preceding claim, wherein the housing (110) has a holding area (115) for placing the first side (140a) of the printed circuit board (140) so that the second side (140b) is at least substantially flush with the aperture (120).

9. The blind spot indicator assembly (100) of claim 8, wherein the holding area (115) comprises opposite walls (115a, 115b) for placing the first side (140a) of the printed circuit board (140) so that the second side (140b) of the printed circuit board (140) is at least substantially flush with the aperture (120).

10. The blind spot indicator assembly (100) of any preceding claim, wherein the printed circuit board (140) is L-shaped such that a gap is defined between the printed circuit board (140) and the housing (110) for allowing the light to pass through.

11. The blind spot indicator assembly (100) of any preceding claim, wherein at least one of the light control assembly (130) and the lens assembly (160) comprises a diffusive portion (165).

12. The blind spot indicator assembly (100) of any preceding claim, wherein the double-side adhesive tape (170), when viewed from the lens assembly (160), covers a least 50% of the second side (140b) of the printed circuit board (140), more preferably 90% of the second side (140b) of the printed circuit board (140), optimally 100% of the second side (140b) of the printed circuit board (140).

13. A method for assembling a blind spot indicator assembly (100), the blind spot indicator assembly (100) comprising a housing (110) including an aperture (120) and an inner surface, a printed circuit board (140) having a first side (140a), and a second side (140b) opposite to the first side (140a), and a lens assembly (160) arranged to close the aperture (120), wherein the method comprises:
- arranging the housing (110) of the blind spot indicator assembly (100) with the aperture (120) of the housing (110) perpendicular to the direction of gravity and further away to the ground than a second side of the housing (110) opposite the first side of the housing (110), and with the second side (140b) of the printed circuit board (140) further away to the ground than the first side (140a) of the printed circuit board (140);
- arranging the printed circuit board (140) in the holding area (115) of the housing (110); and
- arranging the lens assembly (160) including a double-side adhesive tape (170) such that said double-side adhesive tape (170) is arranged between the lens assembly (160) and both the housing (110) and the printed circuit board (140).

14. The method of claim 13, wherein it comprises providing the double-side adhesive tape (170) on the second side (140b) of the printed circuit board (140) and on the external surface of the aperture (120) of the housing (110).

15. The method of claim 13 or 14, wherein it further comprises applying a compression pressure to the housing (110) and the lens assembly (160) in an assembly direction (D), at least substantially perpendicular to lens assembly (160).
